# EUROPEAN PATENT APPLICATION

(11) **EP 2 306 347 A1**
(43) Date of publication of application: **06.04.2011**
(21) Application number: 10180059.7
(22) Date of filing: 27.09.2010
(51) Int. Cl.: G06F 17/30

(54) **Method of synchronizing information across multiple computing devices**

(30) Priority: 25.09.2009 US 246038 P
(71) Applicant: Poon Roger J, ., Covington WA Washington 98042 (US)
(72) Inventor: Poon Roger J, ., Covington WA Washington 98042 (US)
(74) Representative: Glawe, Delfs, Moll

(57) **Abstract**

A method of synchronizing data across multiple computing devices, at least one of the computing devices being a mobile device. After at least one modification has been made to data stored by a first computing device, the first computing device compiles synchronization information comprising first information related to the modification and identifying the first computing device. Then, the first computing device sends the synchronization information to a server. The server identifies a second computing device associated with the first computing device, and sends update information to the second computing device. The update information comprises second information related to the modification made to the data stored by the first computing device. In response to receiving the update information, the second computing device modifies data stored on the second computing device in accordance with the second information, or outputs the second information of the update information.

## Description

### CROSS REFERENCE TO RELATED APPLICATION(S)

This application claims the benefit of U.S. Provisional Application No. 61/246,038, filed September 25, 2009, which is incorporated herein by reference in its entirety.

### BACKGROUND OF THE INVENTION

### Field of the Invention

The present invention is directed generally to methods of synchronizing information across multiple computing devices.

### Description of the Related Art

A common problem faced by users of mobile or handheld computing devices is how to synchronize information stored on a mobile device with information stored on other mobile or stationary computing devices. For example, if a user adds an appointment to an electronic calendar program executing on a wireless personal digital assistant, the new appointment will not appear in another instance of the same electronic calendar program executing on the user's home computer. For the new appointment to appear in the same electronic calendar program executing on the user's home computer, the user's home computer and personal digital assistant must be synchronized.

Current methods for synchronizing information stored on mobile computing devices with information stored on other mobile or stationary computing devices typically involve physically connecting the devices together and manually transferring information between them. Unfortunately, this "active" approach requires effort on the part of the user and some users may forget or are simply unmotivated to synchronize information across devices. Further, users may be unwilling to travel between devices located in different physical locations.

The conventional approach requires both physical co-location and connection of computing devices making this approach inconvenient. This inconvenience leads to inaccurate or inconsistent information being stored on the user's computing devices. For example, the user's work and home computers may display different lists of contacts. Thus, to obtain contact information stored on the user's work computer that is not stored on the user's home computer, the user must travel from the user's home to the user's workplace.

Therefore, a need exists for a method of synchronizing information across multiple computing devices that does not require co-location of the devices and/or physical connection of the devices. The present application provides these and other advantages as will be apparent from the following detailed description and accompanying figures.

### BRIEF DESCRIPTION OF THE SEVERAL VIEWS OF THE DRAWING(S)

Figure 1 is a block diagram of a communication network in which the invention may be implemented.
Figure 2 is a block diagram of a mobile device configured to communicate over the communication network of Figure 1.
Figure 3 is a diagram of a hardware environment and an operating environment in which a server computing device and one or more client computing devices connected to the communication network of Figure 1 may be implemented.
Figure 4 is a flow diagram illustrating a method performed by a first computing device connected to the communication network of Figure 1.
Figure 5 is a flow diagram illustrating a method performed by a server computing device connected to the communication network of Figure 1.
Figure 6 is a flow diagram illustrating a method performed by a second computing device connected to the communication network of Figure 1.

### DETAILED DESCRIPTION OF THE INVENTION

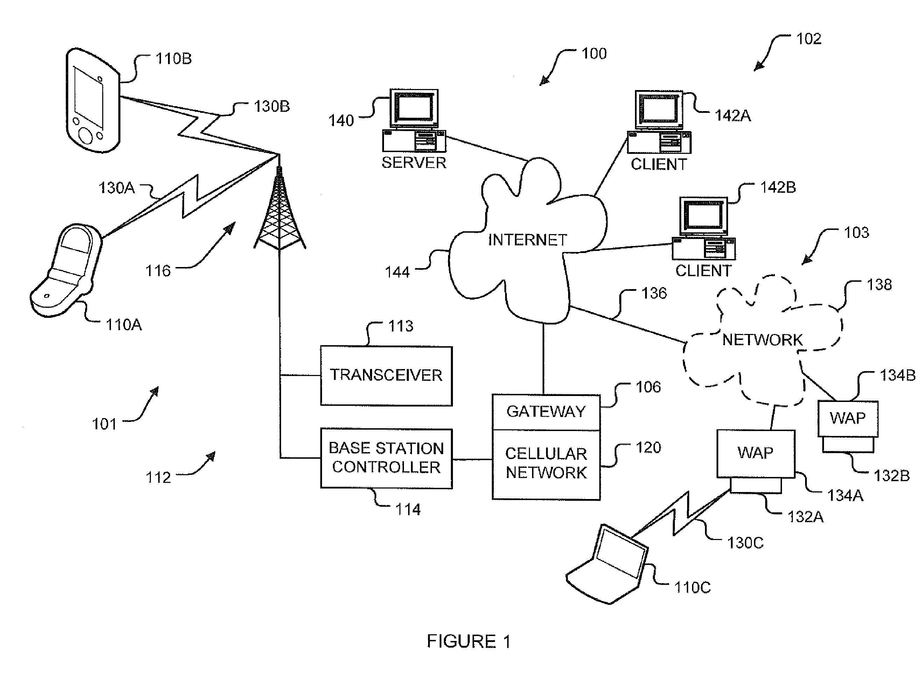

Figure 1 is a schematic of a communication network 100. The communication network 100 includes a first network portion 101 connected to a second network portion 102. Depending upon the implementation details, the first network portion 101 may be connected to the second network portion 102 by at least one gateway node 106. However, this is not a requirement. The first network portion 101 is configured to communicate with wireless and/or mobile devices, such as mobile devices 110A-110C. The second network portion 102 is configured to communicate with computing devices, such as personal computers, laptops, and the like. As is apparent to those of ordinary skill in the art, the first and second network portions 101 and 102 may be implemented using wired and wireless components and are not limited to being implemented with any particular hardware or software.

As is appreciated by those of ordinary skill in the art, the first network portion 101 of the communication network 100 may include a base station 112 coupled to a cellular network 120 that incorporates multiple base stations like the base station 112. Each of the base stations 112 comprises a transceiver 113 and a base station controller 114. The base station controller 114 controls operation of the base station 112. The base station 112 also has an antenna system 116. Operational details of the base station 112, including its base station controller 114 and antenna system 116 are known in the art and need not be described in greater detail herein.

The cellular network 120 may be configured to implement one or more communication protocols known in the art. In cellular network 120, each of the base stations 112 is configured to communicate with a plurality of mobile devices over a plurality of communication links. In Figure 1, the base station 112 is illustrated communicating with the first mobile device 110A over a first wireless communication link 130A and a second mobile device 110B over a second wireless communication link 130B.

The mobile devices 110A-110C may be implemented as mobile/handheld devices, such as mobile stations, personal digital assistants ("PDAs"), cellular telephones, smartphones, laptops, tablet computers, and the like. In Figure 1, the first mobile device 110A is illustrated as being a cellular telephone, the second mobile device 110B is illustrated as being a personal digital assistant ("PDA"), and the third mobile device 110C is illustrated as being a laptop computer. Although referred to herein as "mobile devices," those skilled in the art will appreciate that a user can be in a fixed location, such as a home or office, and communicate with the base station 112 without physically changing location. Thus, the present disclosure is not limited to a mobile device that is actually moving. Further, the mobile device may include consumer premise equipment and subscriber stations operated at fixed locations.

In an alternate embodiment, the first network portion 101 may be implemented as a system 103. The system 103 includes one or more wireless transceivers 132A and 132B that are each configured to communicate with the mobile devices 110A-110C via wireless communication links. By way of a non-limiting example, in Figure 1, the wireless transceiver 132A is illustrated communicating with the third mobile device 110C via a third wireless communication link 130C. The wireless transceivers 132A and 132B may be components of one or more conventional wireless access points 134A and 134B that are each connected to other components of the system 103. Alternatively, the wireless access points 134A and 134B may be connected to the second network portion 102 by one or more (wired or wireless) communication links (e.g., a wired or wireless communication link 136).

By way of a non-limiting example, the system 103 may be implemented using a single wireless access point (e.g., the wireless access point 134) connected to the second network portion 102 by the communication link 136. The single wireless access point may include a wireless router (not shown) connected to the communication link 136. Alternatively, the wireless access point may be coupled to a wireless router (not shown) that is connected to the communication link 136.

Optionally, the wireless access points 134A and 134B may be connected to a network 138 that is coupled to the second network portion 102 by the communication link 136. By way of a non-limiting example, the wireless access points 134A and 134B may be implemented using components (whether certified by Wireless Ethernet Compatibility Alliance, Inc. or not) based on the IEEE 802.11 family of protocols (commonly referred to as "Wi-Fi"). However, as is appreciated by those of ordinary skill in the art, other wireless protocols may be used.

The second network portion 102 of the communication network 100 includes one or more server computing devices 140 and one or more client computing devices 142A and 142B. For ease of illustration, in Figure 1, the second network portion 102 is illustrated as including one server computing devices 140 and two client computing devices 142A and 142B. However, this is not a requirement, and embodiments in which the second network portion 102 includes different numbers of server computing devices and client computing devices are within the scope of the present teachings.

The client computing devices 142A and 142B are configured to communicate over the second network portion 102 with the server computing device 140. By way of a non-limiting example, the second network portion 102 may include the Internet 144. As is appreciated by those of ordinary skill in the art, communication over the second network portion 102 may be implemented using any communication protocol known in the art, including TCP/IP protocol.

In embodiments including the optional gateway node 106, the optional gateway node 106 is configured to provide communications between the first network portion 101 and the second network portion 102. For example, the gateway node 106 may translate a first message received from the first network portion 101 in a first format into a second format used in the second network portion 102 and send the first message in the second format to a recipient computing device (e.g., the server computing device 140) over the second network portion 102. Similarly, the gateway node 106 may translate a second message received from the second network portion 102 in the second format into the first format used in the first network portion 101 and send the second message in the first format to a recipient mobile device (e.g., the mobile device 110A) over the first network portion 101.

### MOBILE DEVICES

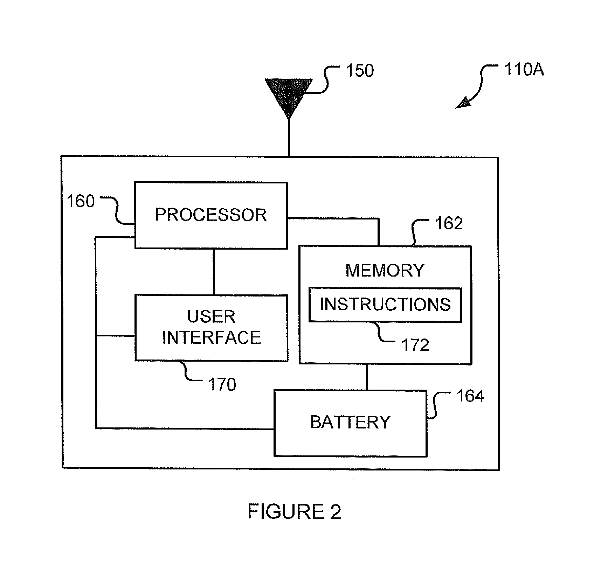

Figure 2 provides a block diagram illustrating relevant components of the mobile devices 110A-110C. For illustrative purposes, the relevant components of the mobile device 110A will be described. However, as is apparent to those of ordinary skill in the art, the mobile devices 110B and 110C each include substantially similar components.

The mobile device 110A has an antenna 150, at least one processor 160, a memory 162, at least one battery 164, and a user interface 170. However, the mobile device 110C may omit the antenna 150 or optionally include it. The memory 162 may comprise random access memory (RAM) and read-only memory (ROM). The memory 162 contains computer-executable instructions 172 and data that control the operation of the processor 160. The memory 162 may also include a basic input/output system (BIOS), which contains the basic routines that help transfer information between elements within the mobile device 110A. The battery 164 supplies power to the antenna 150, the processor 160, the memory 162, and the user interface 170. The present invention is not limited by the specific hardware component(s) used to implement the antenna 150, the processor 160, the memory 162, the battery 164, or the user interface 170 of the mobile device 110A.

Optionally, the memory 162 may include external or removable memory devices such as a Subscriber Identity Module ("SIM") card, flash memory device, and the like. The mobile device 110A may also include one or more I/O interfaces (not shown) such as a serial interface (e.g., RS-232, RS-432, and the like), an IEEE-488 interface, a universal serial bus (USB) interface, a parallel interface, and the like, for communication with computing devices, removable memory devices (such as flash memory drives, external floppy disk drives, etc.), and the like.

The user interface 170 may include a telephone key pad, an alphanumeric keypad, keys (e.g., input keys, preset hot keys, programmable hot keys, etc.), buttons (e.g., a left action button, a right action button, a navigation button, a multidirectional navigation button, etc.), switches (e.g., a volume switch, a ringer on/off switch, etc.), and so forth. The user interface 170 may include a display device, such as a liquid crystal display (LCD) device. The user interface 170 also includes an audio input device (e.g., a microphone), and audio output device (e.g., one or more speakers, an audio port to connect an audio headset, and the like). Optionally, the user interface 170 may include an image capture device (e.g., a camera, video camera, and the like).

The computer-executable instructions 172 stored in the memory 162 may be organized in program modules that include function calls, routines, programs, objects, components, data structures, etc., that perform particular tasks or implement particular abstract data types.

The computer-executable instructions 172 include instructions that implement one or more applications that store information in one or more file types. For example, a word processing application may store document information in a document file. The user may create and/or edit such files using the user interface 170. By way of non-limiting examples, the computer-executable instructions 172 may implement a calendar or scheduling application, an electronic telephone book or contact list application, a notepad application, a favorites list application, an electronic address book application, a word processing application, a spreadsheet application, a database application, an Internet browser application, an organization application, an email application, a file manager application, and the like.

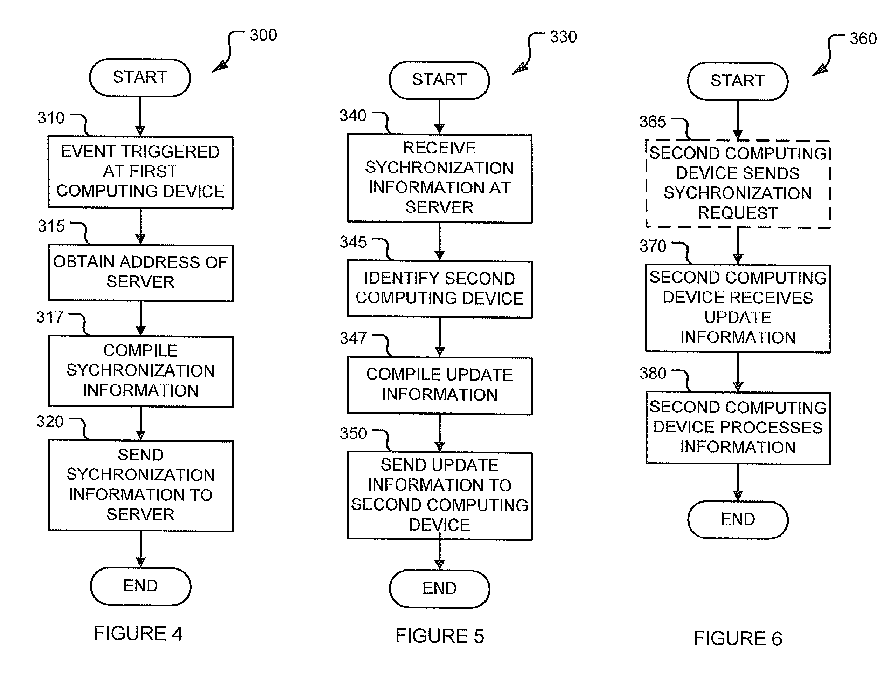

The computer-executable instructions 172 stored in the memory 162 also include instructions that when executed by the processor 160, direct the processor 160 to perform one or both of the methods 300 and 360 (illustrated in Figures 4 and 6 and described below).

### COMPUTING DEVICES

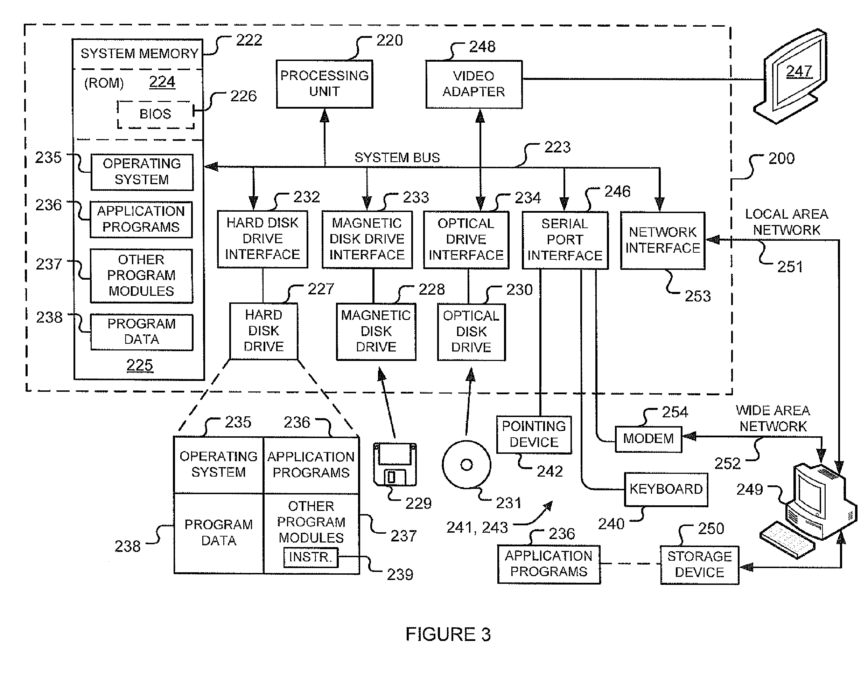

Referring to Figure 3, the server computing device 140 and client computing devices 142A and 142B may each be implemented on a computing device 200. Further, in embodiments in which one or more of the mobile devices 110A-110C are implemented as computing devices (such as laptops or tablet computers) such devices may each be implemented on a different computing device 200 configured to be mobile. The description of Figure 3 is intended to provide a brief, general description of suitable computer hardware and a suitable computing environment in which implementations may be practiced. Although not required, implementations are described in the general context of computer-executable instructions, such as program modules, being executed by a computer, such as a personal computer. Generally, program modules include function calls, routines, programs, objects, components, data structures, etc., that perform particular tasks or implement particular abstract data types.

Moreover, those skilled in the art will appreciate that implementations may be practiced with other computer system configurations, including hand-held devices, multiprocessor systems, microprocessor-based or programmable consumer electronics, network PCs, minicomputers, mainframe computers, and the like. Implementations may also be practiced in distributed computing environments where tasks are performed by remote processing devices that are linked through a communications network. In a distributed computing environment, program modules may be located in both local and remote memory storage devices. By way of a non-limiting example, the server computing device 140 may be implemented in a server farm that includes a number of like computing devices performing similar or related functions.

The exemplary hardware and operating environment of Figure 3 includes the computing device 200, which may be a general-purpose computing device of any type known in the art, including a processing unit 220, a system memory 222, and a system bus 223 that operatively couples various system components, including the system memory 222 to the processing unit 220. There may be only one or there may be more than one processing unit 220, such that the processor of computing device 200 comprises a single central-processing unit (CPU), or a plurality of processing units, commonly referred to as a parallel processing environment. The computing device 200 may be a conventional computer, a distributed computer, or any other type of computer.

The system bus 223 may include any bus structure including a memory bus or memory controller, a peripheral bus, and a local bus using any of a variety of bus architectures. The system memory 222 may also be referred to as simply the memory, and includes read only memory (ROM) 224 and random access memory (RAM) 225. A basic input/output system (BIOS) 226, containing the basic routines that help to transfer information between elements within the computing device 200, such as during start-up, is stored in ROM 224. The computing device 200 further includes a hard disk drive 227 for reading from and writing to a hard disk, not shown, a magnetic disk drive 228 for reading from or writing to a removable magnetic disk 229, and an optical disk drive 230 for reading from or writing to a removable optical disk 231 such as a CD ROM or other optical media.

The hard disk drive 227, magnetic disk drive 228, and optical disk drive 230 are connected to the system bus 223 by a hard disk drive interface 232, a magnetic disk drive interface 233, and an optical disk drive interface 234, respectively. The drives and their associated computer-readable media provide nonvolatile storage of computer-readable instructions, data structures, program modules, and other data for the computing device 200. It should be appreciated by those skilled in the art that any type of computer-readable media, which can store data that is accessible by a computer, such as magnetic cassettes, flash memory cards, digital video disks, Bernoulli cartridges, random access memories (RAMs), read only memories (ROMs), and the like, may be used in the exemplary operating environment.

A number of program modules may be stored on the hard disk drive 227, magnetic disk 229, optical disk 231, ROM 224, or RAM 225, including an operating system 235, one or more application programs 236, other program modules 237, and program data 238. The application programs 236 include one or more applications that store information input by the user. By way of non-limiting examples, the application programs 236 may include a calendar or scheduling application, an electronic telephone book or contact list application, a notepad application, a favorites list application, an electronic address book application, a word processing application, a spreadsheet application, a database application, an Internet browser, an organization application, an email application, a file manager application, and the like. The other program modules 237 include computer-executable instructions 239 that when executed by the processing unit 220, direct the processing unit 220 to perform one or more of the methods 300, 330, and 360 (illustrated in Figures 4-6 and described below) or portions thereof. In alternative implementations, the application programs 236 may include computer-executable instructions 239 that when executed by the processing unit 220, direct the processing unit 220 to perform one or more of the methods 300, 330, and 360 (illustrated in Figures 4-6 and described below) or portions thereof.

A user may enter commands and information into the personal computing device 200 through input devices 241 such as a keyboard 240 and pointing device 242. Other input devices (not shown) may include a microphone, joystick, game pad, satellite dish, scanner, or the like. These and other input devices are often connected to the processing unit 220 through a serial port interface 246 that is coupled to the system bus 223, but may be connected by other interfaces, such as a parallel port, game port, or a universal serial bus (USB). A monitor 247 or other type of display device is also connected to the system bus 223 via an interface, such as a video adapter 248. In addition to the monitor, computers typically include other peripheral output devices (not shown), such as speakers and printers. Thus, the input devices may be used by a user to input information into the application programs 236 and the output devices may be used by a user to output information from the application programs 236. Together the input devices and output devices form a user interface 243 for the computing device 200.

The computing device 200 may operate in a networked environment using logical connections to one or more remote computers, such as remote computing device 249. These logical connections are achieved by a communication device coupled to or a part of the computing device 200 (as the local computer). Implementations are not limited to a particular type of communications device. The remote computing device 249 may be another computing device substantially similar to computing device 200, a server, a router, a network PC, a client, a peer device or other common network node, and typically includes many or all of the elements described above relative to the computing device 200, although only a memory storage device 250 has been illustrated in Figure 3. The logical connections depicted in Figure 3 include a local-area network (LAN) 251 and a wide-area network (WAN) 252. Such networking environments are commonplace in offices, enterprise-wide computer networks, intranets, and the Internet. The second network portion 102 (see Figure 1) may include any of these networking environments.

When used in a LAN-networking environment, the computing device 200 is connected to the local network 251 through a network interface or adapter 253, which is one type of communications device. When used in a WAN-networking environment, the computing device 200 typically includes a modem 254, or any other type of communications device for establishing communications over the wide area network 252, such as the Internet. The modem 254, which may be internal or external, is connected to the system bus 223 via the serial port interface 246. In a networked environment, program modules depicted relative to the personal computing device 200, or portions thereof, may be stored in a remote memory storage device. It is appreciated that the network connections shown are exemplary and other means of and communications devices for establishing a communications link between the computers may be used.

The computing device 200 and related components have been presented herein by way of particular example and also by abstraction in order to facilitate a high-level view of concepts involved. The actual technical design and implementation may vary based on particular implementation while maintaining the overall nature of concepts disclosed.

### METHODS

Referring to Figures 4-6, together the methods 300, 330, and 360 implement a method of synchronizing information stored on a first computing device (e.g., one of the mobile devices 110A and 110B and the client computing devices 142A and 142B) with a second computing device (e.g., a different one of the mobile devices 110A and 110B and the client computing devices 142A and 142B). For example, the methods 300, 330, and 360 may be used to synchronize information entered into a calendar application implemented on the mobile device 110A with information entered into a corresponding calendar application implemented on the mobile device 110B, the mobile device 110C, the client computing device 142A, and/or the client computing device 142B. Further, the methods 300, 330, and 360 may be used to synchronize information entered into a calendar application implemented on the client computing device 142A with information entered into a corresponding calendar application implemented on the mobile device 110A, the mobile device 110B, the mobile device 110C, and/or the client computing device 142B.

Figure 4 is a flow diagram of the method 300. As mentioned above, each of the mobile devices 110A-110C (see Figure 1) may each be configured to implement the method 300. Further, each of the client computing devices 142A and 142B (see Figure 1) may also be configured to implement the method 300. In first block 310, an event is triggered in the first computing device (e.g., the mobile device 110A, the mobile device 110B, the mobile device 110C, the client computing device 142A, and/or the client computing device 142B). For ease of illustration, the method 300 will be described as being performed by the mobile device 110A (see Figure 2).

Thus, in this example, the event is triggered in the mobile device 110A in first block 310. Referring to Figure 2, the event is triggered by the instructions 172, which instruct the processor 160 to generate the event. The instructions 172 may instruct the processor 160 to generate an event when the user inputs information into the mobile device 110A via the user interface 170. For example, an event may be triggered when the user uses the user interface 170 to add a new contact to a contact list, delete an existing contact from the contact list, edit information about an existing contact on the contact list, create a new calendar event, edit an existing calendar event, delete an existing calendar event, create a new alert, edit an existing alert, delete an existing alert, create a new file, edit an existing file, delete an existing file, bookmark a website, modify or receive data which may consequently affect or require verification(s) involving checksums or digital signatures, and the like.

Alternatively, the instructions 172 may instruct the processor 160 to generate the event after the occurrence of a particular action that requires synchronization across multiple devices. For example, an event may be triggered automatically when the user opens an email message, receives an email message, deletes an email message, and the like.

By way of yet another example, the instructions 172 may instruct the processor 160 to occasionally generate an event automatically. For example, the instructions 172 may instruct the processor 160 to automatically generate an event periodically (e.g., every 10 minutes, every night, and the like). By way of another non-limiting example, the instructions 172 may instruct the processor 160 to automatically generate an event at random or irregular intervals.

Returning to Figure 4, after the event is triggered, in block 315, the first computing device obtains the address of the server computing device 140 (see Figure 1) on the second network portion 102. Thus, referring to Figure 1, in this example, the instructions 172 instruct the processor 160 to obtain the address of the server computing device 140. By way of a non-limiting example, the mobile device 110A may store the address of the server computing device 140 in its memory 162. For example, the mobile device 110A may be preprogrammed with the address of the server computing device 140 in its memory 162. By way of another non-limiting example, the address of the server computing device 140 may be user-configured (e.g., entered by the user into the memory 162 via the user interface 170).

In block 317, the first computing device compiles synchronization information. The synchronization information includes any information or data to be synchronized with information stored in the second computing device (e.g., the mobile device 110B, the mobile device 110C, the client computing device 142A, and/or the client computing device 142B). The synchronization information may also include other details about the event, such as an identifier of the first computing device (e.g., the mobile device 110A), origin of the event, an identification of an action that triggered the event, time of event occurrence, and the like.

By way of non-limiting examples, the synchronization information may include copies of modified blocks of data (e.g., files) or alternatively may identify updates/changes made to modified blocks of data. The blocks of data may be continuous (or contiguously stored in memory) or discontinuous (having portions stored in noncontiguous memory locations). Optionally, settings and other data may also be included in the synchronization information.

The first computing device may store a time data of the last time the first computing device compiled synchronization information. In such embodiments, the synchronization information may include only information related to modifications to files or data stored on the first computing device that occurred since the last time the first computing device compiled synchronization information. Further, the synchronization information may include only information related to particular file types (e.g., document files).

In block 320, the synchronization information is sent by the first computing device to the one or more server computing devices of the second network portion 102 (see Figure 1). Thus, referring to Figure 1, in this example, the synchronization information is sent by the mobile device 110A to the server computing device 140. As mentioned above, the one or more server computing devices of the second network portion 102 (see Figure 1) may be implemented as a server farm (not shown). Therefore, the synchronization information may be sent by the first computing device to the server farm (not shown) for processing thereby.

Referring to Figures 1 and 2, in embodiments in which the first network portion 101 includes the cellular network 120, the instructions 172 instruct the processor 160 to transmit the synchronization information to the base station 112 (e.g., via the antenna 150) over the first wireless communication link 130A. As may best be viewed in Figure 1, the transceiver 113 receives the transmitted synchronization information and communicates it to the base station controller 114, which forwards the received synchronization information to the cellular network 120. In embodiments including one or more of the gateway nodes 106, the received synchronization information is forwarded by the gateway node(s) 106 on the second network portion 102 to the address associated with the server computing device 140 on the second network portion 102.

Alternatively, in embodiments in which the first network portion 101 includes the system 103, the instructions 172 instruct the processor 160 to transmit the synchronization information to one of the wireless access points 134A and 134B via the antenna 150 over the third wireless communication link 130C. One of the wireless transceivers 132A and 132B receives the transmitted synchronization information. When the wireless transceiver 132A receives the synchronization information, the wireless access point 134A forwards the received synchronization information to the second network portion 102 (optionally via the network 138) over the communication link 136. On the other hand, when the wireless transceiver 132B receives the synchronization information, the wireless access point 134B forwards the received synchronization information to the second network portion 102 (optionally via the network 138) over the communication link 136.

After receiving the synchronization information, the second network portion 102 delivers the forwarded synchronization information to the address associated with the server computing device 140.

If instead, the method 300 is performed by the client computing device 142A, the synchronization information is sent by the client computing device 142A via the network interface 253 (see Figure 3) to the address on the second network portion 102 associated with the server computing device 140.

Then, the method 300 terminates.

Figure 5 is a flow diagram of the method 330. Referring to Figure 3, the instructions 239 stored on the server computing device 140 when executed by the processing unit 220 implement the method 330 (see Figure 5). Turning to Figure 5, in first block 340, the server computing device 140 (see Figure 1) receives the synchronization information sent by the first computing device (e.g., the mobile device 110A). For example, the server computing device 140 may receive the synchronization information from the second network portion 102 over its network interface 253.

In next block 345, the server computing device 140, identifies a second computing device (e.g., the mobile device 110B, the mobile device 110C, the client computing device 142A, and/or the client computing device 142B) or plurality of second computing devices requiring synchronization with the first computing device. By way of a non-limiting example, the server computing device 140 may store addresses and/or telephone numbers of one or more second computing devices associated with the first computing device (e.g., the mobile device 110A). Such information may be stored in a user profile, user account information, a file, a database, in memory, on another server, and the like. However, storing this information is optional. Alternatively, the server computing device 140 may send the update information to the second computing device (or the plurality of second computing devices) as soon as the synchronization information is received by the server computing device 140 thereby conserving storage space on the hard drive of the server computing device 140. For illustrative purposes, in this example, in block 345, the server computing device 140 will be described as having identified the mobile device 110B, the mobile device 110C, the client computing device 142A, and the client computing device 142B.

By way of another non-limiting example, in block 345, the server computing device 140 may receive a synchronization request from the second computing device (e.g., the mobile device 110B). The synchronization request includes the address of the second computing device requesting synchronization with the first computing device (e.g., the mobile device 110A). The server computing device 140 may store addresses, telephone numbers, and/or any other data which may identify the one or more first computing devices or user thereof associated with the second computing device (e.g., the mobile device 110B) so that the server computing device 140 can match the second computing device with the first computing device. Alternatively, the synchronization request may identify the first computing device associated with the second computing device.

Thus, by the completion of block 345, the server computing device 140 has matched the synchronization information received from the first computing device with at least one recipient second computing device so that files and data stored by both the first and second computing devices may be synchronized.

In block 347, the server computing device 140 uses synchronization information received for each of the second computing devices to compile update information to be sent to each of the second computing devices. The update information may include any information included in the synchronization information. Optionally, the update information may include extraneous and miscellaneous data which may be unrelated to the synchronization information (e.g. presentation and layout data). As is apparent to those of ordinary skill in the art, the first computing device may send synchronization information to the server computing device 140 more than once for a particular second computing device before the update information is sent to that particular second computing device. Further, the server computing device 140 may receive synchronization information for a particular second computing device from more than one source computing device. In block 347, the server computing device 140 may combine all of the synchronization information received for a particular second computing device in the update information to be sent to the particular second computing device. Alternatively, the server computing device 140 may include only "chunks" of data in the update information to be sent to the particular second computing device. In such embodiments, the update information may be sent to the particular second computing device in multiple packets (or messages) as opposed to in a single packet (or message). Further, only data that needs to be updated may be sent. For example, when contact data is updated, only an updated portion of the contact data, as opposed to all of the contact data, may be sent to the particular second computing device.

If the synchronization information includes contradictory updates (e.g., edit a contact and delete the same contact), the update information may be compiled to include only the most recently received synchronization information. Thus, if a contact was edited then later deleted, the update information may include only the delete information. Alternatively, the update information may include all of the synchronization information and an indication of the order in which the synchronization information was sent or received. Due to latency, data may be received in a different order than it was sent. Therefore, the order or time in which the synchronization information was sent may be used to reconstruct the synchronization information in a correct order. In other words, the synchronization information may be sorted by the time of event occurrences included in the synchronization information. To avoid sending the update information to the second computing device more than once, after the update information is sent, it may be marked as having been sent or simply deleted from the server computing device 140. Further, after the synchronization information has been compiled into the update information, the synchronization information may be marked as having been compiled or simply deleted from the server computing device 140.

In block 350, the server computing device 140 forwards the update information to the second computing device(s) identified in block 345. Thus, in this example, in block 350, the server computing device 140 forwards update information to each of the mobile device 110B, the mobile device 110C, the client computing device 142A, and the client computing device 142B. The update information is sent by the server computing device 140 to the address of the client computing device 142A via the second network portion 102. Similarly, the update information is sent by the server computing device 140 to the address of the client computing device 142B via the second network portion 102. For example, the server computing device 140 may send the update information to the second network portion 102 over its network interface 253.

Referring to Figures 1 and 3, the instructions 239 instruct the processing unit 220 to use its network interface 253 to send the update information to the address of the mobile device 110B via the second network portion 102. In embodiments in which the first network portion 101 includes the cellular network 120, the second network portion 102 delivers the update information to the cellular network 120. In embodiments including the one or more gateway nodes 106, the second network portion 102 delivers the update information to the gateway node(s) 106, which forward the update information to the cellular network 120. The cellular network 120 forwards the update information to a base station 112 connected to the mobile device 110B. The base station controller 114 instructs the transceiver 113 to transmit the update information to the address (or telephone number) of the mobile device 110B.

In embodiments in which the first network portion 101 includes the system 103, the second network portion 102 delivers the update information to one of the wireless access points 134A or 134B, which forwards the update information to the mobile device 110C.

Optionally, before forwarding the update information, the server computing device 140 may store the update information (e.g., on the hard drive 227) or sort, compare, and/or modify the data (e.g., merging the update information with a larger block of data such as presentation data). Alternatively, the server computing device 140 may send/relay the update information without storing it. In yet another alternative embodiment, the server computing device 140 may store the update information and wait to send it until the server computing device 140 is explicitly requested to do so by the one or more second computing device(s) (e.g., one or more of the mobile devices 110A-110C, one or more of the client computing devices 142A and 142B, and the like).

Then, the method 330 terminates.

Figure 6 is a flow diagram of the method 360. As mentioned above, each of the mobile devices 110A-110C may be configured to implement the method 360. Further, each of the client computing devices 142A and 142B may also be configured to implement the method 360.

In optional first block 365, the second computing device sends a synchronization request for information to the server computing device 140. The user may manually send the synchronization request using the user interface 170 (see Figure 2) or the user interface 243 (see Figure 3). The synchronization request may be sent by pressing a particular button, or predetermined pattern of buttons. Alternatively, one or more applications (e.g., functions, programs, services, software, and the like) may automatically trigger the synchronization request. For example, when the user executes (or opens) a scheduling application, the scheduling application may automatically send the synchronization request for update information to the server computing device 140. Further, other types of interaction with the application may trigger the synchronization request. By way of non-limiting examples, the following actions may trigger the synchronization request: downloading and transferring file(s); reading email; creating an alert; bookmarking a website; events generated by a server; events generated by other client machines; and the like.

Thus, in some embodiments, particular applications may each trigger synchronization requests. In such embodiments, before sending a synchronization request, an application may connect to the server computing device 140 to determine whether any update information for the application running on the second computing device is stored on the server computing device 140. For example, a scheduling application may determine whether the server computing device 140 is storing any new scheduling update information (e.g., changes or updates) that is different from the scheduling information presently stored or available on the second computing device. In such embodiments, the scheduling application may download only the new scheduling update information (but not the rest of the update information). Alternatively, an application may skip determining whether any new information is stored on the server computing device 140, and instead download any update information for the application that triggered the synchronization request. If an application did not trigger the request, the second computing device may download all of the update information for the applications installed on the second computing device and/or all of the update information for the second computing device.

By way of yet another example, the second computing device may include instructions that occasionally (e.g., periodically) send requests for update information to the server computing device 140. Such instructions may execute in the background.

In next block 370, the second computing device receives update information sent by the server computing device 140. Turning to Figure 1, when the method 360 is implemented by the client computing device 142A, the client computing device 142A receives the update information over the second network portion 102 via the network interface 253 (see Figure 3). Similarly, when the method 360 is implemented by the client computing device 142B, the client computing device 142B receives the update information over the second network portion 102 via the network interface 253 (see Figure 3). When the method 360 is implemented by the mobile device 110B, the mobile device 110B receives the update information transmitted by the base station 112 (e.g., via the antenna 150 illustrated in Figure 2) over the first communication link 130B. In the example implementation provided in Figure 1, when the method 360 is implemented by the mobile device 110C, the mobile device 110C receives the update information transmitted by the wireless access point 134A via the antenna 150 (see Figure 2) over the third communication link 130C. Alternatively, the mobile device 110C may receive the update information transmitted by the wireless access point 134B via the antenna 150 (see Figure 2).

Returning to Figure 6, in next block 380, the second computing device processes the update information received from the server computing device 140. By way of a non-limiting example, the second computing device may validate or authenticate the update information received. Then, if the update information indicates that information stored on the second computing device should be updated, the second computing device updates its information (i.e., synchronizes its information with that received from the server computing device 140) and/or outputs the update information (e.g. displays it via the user interface 170, the user interface 243, or the like).

In certain embodiments, the computer readable and executable instructions stored in the second computing device may distribute the update information received to the appropriate applications and/or storage locations. For example, if the update information received from the server computing device 140 includes information related to an email message, the instructions route the information related to the email message to an email application or a storage location associated with the email application. On the other hand, if the update information received from the server computing device 140 includes information related to a calendar entry, the instructions route the information related to the calendar entry to a calendar application or a storage location associated with the calendar application.

However, in particular embodiments, it is not necessary to send a synchronization request to the server computing device 140. Instead, when the second computing device is connected to the server computing device 140, the server computing device "pushes" update information to the second computing device as soon as the update information is available without any interaction, request, or action necessarily being performed on the second computing device.

Then, the method 360 terminates.

The methods 300, 330, and 360 may be characterized as passively and (optionally automatically) synchronizing information (e.g., contacts, calendar events, alerts, notes, etc.) across multiple computing devices (e.g., the mobile device 110A, the mobile device 110B, the mobile device 110C, the client computing device 142A, and/or the client computing device 142B). The methods 300, 330, and 360 may be used to passively synchronize files, information, data, settings, and the like immediately following the occurrence of an action that triggers the generation of an event. For example, when a new contact is added by the user to a contacts list stored on the mobile device 110A, the new contact may also be added to the user's home computer (e.g., the client computing device 142A), work computer (e.g., the client computing device 142B), PDA (the mobile device 110B), laptop (e.g., the mobile device 110C), and the like. Synchronizing information shortly after it is updated on the first computing device with the second computing device may help conserve the life of the battery 164 of the first computing device.

The methods 300, 330, and 360 may be used to synchronize many different files across multiple computing devices connected to the communications network 100. For example, a first user in a first location (e.g., an airport) may receive a document file or another type of file from a second user at a second location. The first user may edit the document file (or other type of file) using the first computing device (e.g., one of the mobile devices 110A and 110B). When the first user reaches another location (e.g., a hotel), the first user may wish to use the second computing device (e.g., the client computing device 142A) to continue editing the document file (or other type of file). For example, the first user may wish to use a computing device with a larger screen, such as the monitor 247 illustrated in Figure 3.

The methods 300, 330, and 360 may be used to synchronize the document file (or other type of file) stored on both the first and second computing devices. In this manner, when the first user switches to the second computing device, the first user will be able to continue working right where the first user left off without having to transfer files, change settings, and so forth. Optionally, one or more of the methods 300, 330, and 360 may be implemented using a web interface, which may reduce or eliminate the need for additional software components. This may be desirable when the first and/or second computing devices have limited capabilities.

By way of an example, the following describes how the methods 300, 330, and 360 may be implemented to synchronize a document file across a first computing device (e.g., the mobile device 110A) and a second computing device (e.g., the client computing device 142A). Referring to Figure 4, the method 300 begins when the document file is edited on the first computing device (e.g., the mobile device 110A). In the block 310, an event is triggered on the first computing device. For example, the event may be triggered when the user edited the document (e.g., typed a word, pressed a key, saved the document file, etc.). Alternatively, the event may be triggered at regular intervals (e.g., every 10 seconds) or irregular intervals.

In the block 315, the first computing device obtains the address of the server computing device 140. In block 317, the first computing device compiles synchronization information optionally identifying the edits made to the document file, and in block 320, sends synchronization information to the server computing device 140. The synchronization information may include a copy of the document file, other data, settings information, the entire document file, the entire text of the document, the modified aspects of the document, and/or any other relevant information.

Referring to Figure 5, the method 330 begins in block 340 whereat the server computing device 140 receives the synchronization information from the first computing device (e.g., the mobile device 110A). In block 345, the server computing device 140 identifies the second computing device (e.g., the client computing device 142A) that is to be synchronized with the first computing device. In block 345, optionally, the server computing device 140 may receive a synchronization request from the second computing device (sent by the second computing device in optional block 365 of the method 360 illustrated in Figure 6) that identifies the second computing device and/or provides an address associated with the second computing device. In block 347, the server computing device 140 compiles update information for the word processing application associated with the document file and/or the second computing device. Then, the server computing device 140 sends the update information to the second computing device in block 350.

Referring to Figure 6, in optional block 365, the second computing device sends a synchronization request to the server computing device 140. The synchronization request may be sent automatically when the user accesses the corresponding document file stored in the second computing device. Alternatively, if synchronization information was sent to the server computing device 140 by one or more first computing devices, the update information may be sent automatically by the server computing device 140 to the second computing device without first receiving a synchronization request. As is apparent to those of ordinary skill in the art, a corresponding document file may not be stored on the second computing device. Thus, the synchronization request may request any files created (or updated) since the last synchronization request was sent to the server computing device 140. In such embodiments, the synchronization request may include time data that the last synchronization request was sent. In response, the server computing device 140 will examine the synchronization information received from the first computing device and include synchronization information newer than the time data that the last synchronization request was sent in the update information to be sent to the second computing device.

In block 370, the second computing device receives the update information from the server computing device 140, and in block 380, processes the update information. The update information may include the complete document file or alternatively simply identify updates/changes made to the file. Optionally, settings and other data may also be included in the update information.

In particular implementations, the application used to access or edit the document file may be a web based application, a desktop application, instructions executing within another application, and the like. Furthermore, a separate and independent program, process, or service (which can be optionally running in the background on the second computing device) may be configured to receive update information from the server computing device 140 and distribute the update information to the appropriate locations. For example, update information for an image file is distributed to an application related to images. Similarly, update information for a spreadsheet file is distributed to a spreadsheet application. In other words, update information may be distributed to applications based on capability with the file type contained in the update information.

Alternatively, the update information may simply include copies of any files updated since the last synchronization request was sent. In such embodiments, any files on the second computing device corresponding to these updated files are overwritten by the updated files.

When the first computing device has deleted a file, the second computing device deletes a locally stored copy of the same file. For example, the first computing device may send synchronization information to the server computing device 140 indicating "report.doc" was deleted. When the second computing device receives this information, the second computing device deletes its corresponding local copy of the file named "report.doc." The file name "report.doc" may be a "mapped" to a relative (or virtual) location or an absolute location on the first and second computing devices. With respect to relative locations, the location of the file stored locally on the first and second computing devices can be "mapped" on the file system, "mapped" in memory, "mapped" in a database, and the like.

While the previous example described how the methods 300, 330, and 360 may be used to synchronize a document file, through application of ordinary skill to the present teachings, the methods 300, 330, and 360 may be used to synchronize other editable file types and viewable data including image files, spreadsheet files, file downloads, web browsing history and data, and the like.

The foregoing described embodiments depict different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

While particular embodiments of the present invention have been shown and described, it will be obvious to those skilled in the art that, based upon the teachings herein, changes and modifications may be made without departing from this invention and its broader aspects and, therefore, the appended claims are to encompass within their scope all such changes and modifications as are within the true spirit and scope of this invention. Furthermore, it is to be understood that the invention is solely defined by the appended claims. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean *at least* the recited number (e.g., the bare recitation of "two recitations," without other modifiers, typically means *at least* two recitations, or *two or more* recitations).

An embodiment of the present disclosure provides a method performed by a first computing device, a second computing device, and a server computing device, the first, second, and server computing devices being located remotely with respect to one another, the first and second computing devices each storing data, the method comprising:
at a first computing device, after at least one modification is made to the data stored by the first computing device, compiling first synchronization information comprising first information related to the at least one modification and identifying the first computing device;
at the first computing device, sending the first synchronization information to a server computing device;
at the server computing device, identifying a second computing device associated with the first computing device;
at the server computing device, sending update information to the second computing device, the update information comprising second information related to the at least one modification made to the data stored by the first computing device; and
at the second computing device, in response to receiving the update information, modifying the data stored on the second computing device in accordance with the second information of the update information, or outputting the second information of the update information.

In another embodiment the present disclosure provides the method performed by a first computing device, a second computing device, and a server computing device, the first, second, and server computing devices being located remotely with respect to one another, the first and second computing devices each storing data, wherein the first information of the first synchronization information comprises:
a copy of at least a portion of the data stored by the first computing device, the portion comprising at least one block of data that was modified on the first computing device and at least one block of data that was not modified on the first computing device.

Yet another embodiment of the present disclosure provides the method performed by a first computing device, a second computing device, and a server computing device, the first, second, and server computing devices being located remotely with respect to one another, the first and second computing devices each storing data, wherein the second information of the update information is substantially identical to the first information of the first synchronization information.

Yet another embodiment of the present disclosure provides the method performed by a first computing device, a second computing device, and a server computing device, the first, second, and server computing devices being located remotely with respect to one another, the first and second computing devices each storing data, further comprising:
compiling the second information of the update information based on the first information of the first synchronization information, the second information of the update information being different from the first information of the first synchronization information.

In another embodiment of the present disclosure provides the method performed by a first computing device, a second computing device, and a server computing device, the first, second, and server computing devices being located remotely with respect to one another, the first and second computing devices each storing data, wherein the first information of the first synchronization information comprises:
a copy of at least a portion of the data stored by the first computing device, the portion comprising at least one block of data that was modified on the first computing device.

Yet another embodiment of the present disclosure provides the method performed by a first computing device, a second computing device, and a server computing device, the first, second, and server computing devices being located remotely with respect to one another, the first and second computing devices each storing data, wherein the second information of the update information is substantially identical to the first information of the first synchronization information.

Still another embodiment of the present disclosure provides the method performed by a first computing device, a second computing device, and a server computing device, the first, second, and server computing devices being located remotely with respect to one another, the first and second computing devices each storing data, further comprising:
compiling the second information of the update information based on the first information of the first synchronization information, the second information of the update information being different from the first information of the first synchronization information.

In another embodiment the present disclosure provides the method performed by a first computing device, a second computing device, and a server computing device, the first, second, and server computing devices being located remotely with respect to one another, the first and second computing devices each storing data, wherein the first information of the first synchronization information comprises:
at least one identification of a block of data that was modified on the first computing device and an indication describing the modification made to the block of data.

Yet another embodiment of the present disclosure provides the method performed by a first computing device, a second computing device, and a server computing device, the first, second, and server computing devices being located remotely with respect to one another, the first and second computing devices each storing data, wherein the second information of the update information is substantially identical to the first information of the first synchronization information.

Yet another embodiment of the present disclosure provides, the method performed by a first computing device, a second computing device, and a server computing device, the first, second, and server computing devices being located remotely with respect to one another, the first and second computing devices each storing data, further comprising:
compiling the second information of the update information based on the first information of the first synchronization information, the second information of the update information being different from the first information of the first synchronization information.

In another embodiment the present disclosure provides the method performed by a first computing device, a second computing device, and a server computing device, the first, second, and server computing devices being located remotely with respect to one another, the first and second computing devices each storing data, further comprising:
at the server computing device, comparing the first synchronization information with synchronization information received previously from the first computing device or a different computing device; and
at the server computing device, compiling the update information based on the comparison.

In another embodiment the present disclosure provides the method performed by a first computing device, a second computing device, and a server computing device, the first, second, and server computing devices being located remotely with respect to one another, the first and second computing devices each storing data, wherein at least one of the first and second computing devices is a mobile device connected to a cellular network and the server computing device is coupled to a computer network connected to the cellular network by a gateway node.

In another embodiment the present disclosure provides the method performed by a first computing device, a second computing device, and a server computing device, the first, second, and server computing devices being located remotely with respect to one another, the first and second computing devices each storing data, wherein at least one of the first and second computing devices is a mobile device connected to a wireless access point constructed in accordance with one of the IEEE 802.11 family of protocols and the server computing device is coupled to a computer network connected to the wireless access point constructed in accordance with one of the IEEE 802.11 family of protocols directly or via one or more intervening networks.

In another embodiment the present disclosure provides the method performed by a first computing device, a second computing device, and a server computing device, the first, second, and server computing devices being located remotely with respect to one another, the first and second computing devices each storing data, wherein the first computing device is a mobile device connected to a cellular network, and
the second computing device and the server computing device are both coupled to a computer network connected to the cellular network by a gateway node.

In another embodiment the present disclosure provides the method performed by a first computing device, a second computing device, and a server computing device, the first, second, and server computing devices being located remotely with respect to one another, the first and second computing devices each storing data, further comprising:
at the first computing device, receiving the at least one modification to the data stored by the first computing device via a user interface; and
compiling the first synchronization information in response to having received the at least one modification to the data stored by the first computing device.

In another embodiment the present disclosure provides the method performed by a first computing device, a second computing device, and a server computing device, the first, second, and server computing devices being located remotely with respect to one another, the first and second computing devices each storing data, further comprising:
at the second computing device, sending a synchronization request identifying the second computing device to the server computing device, the server computing device sending the update information for the second computing device in response to receiving the synchronization request.

In another embodiment the present disclosure provides the method performed by a first computing device, a second computing device, and a server computing device, the first, second, and server computing devices being located remotely with respect to one another, the first and second computing devices each storing data, wherein the at least one modification made to the data stored by the first computing device comprises a modification made to a first file associated with a first application, and the method further comprises:
at the second computing device, activating the first application or an associated application;
at the second computing device, sending a synchronization request identifying both the second computing device and the first application to the server computing device, and
at the server computing device, in response to receiving the synchronization request, compiling the update information, the second information of the update information comprising the modification made to the first file associated with the first application.

In another embodiment the present disclosure provides the method performed by a first computing device, a second computing device, and a server computing device, the first, second, and server computing devices being located remotely with respect to one another, the first and second computing devices each storing data, further comprising:
at the first computing device, after a different at least one modification is made to the data stored by the first computing device, compiling second synchronization information comprising third information related to the different at least one modification and identifying the first computing device;
at the first computing device, sending the second synchronization information to the server computing device; and
at the server computing device, compiling the second information of the update information based on both the first and second synchronization information.

In another embodiment the present disclosure provides the method performed by a first computing device, a second computing device, and a server computing device, the first, second, and server computing devices being located remotely with respect to one another, the first and second computing devices each storing data, further comprising:
at a third computing device storing data, after at least one modification is made to the data stored by the third computing device, compiling second synchronization information comprising third information related to the at least one modification made to the data stored by the third computing device and identifying the third computing device;
at the third computing device, sending the second synchronization information to the server computing device; and
at the server computing device, compiling the update information based on both the first and second synchronization information.

Yet another embodiment of the present disclosure provides the method performed by a first computing device, a second computing device, and a server computing device, the first, second, and server computing devices being located remotely with respect to one another, the first and second computing devices each storing data, wherein the second information of the update information comprises a combination of the first information of the first synchronization information and the third information of the second synchronization information.

In another embodiment the present disclosure provides the method performed by a first computing device, a second computing device, and a server computing device, the first, second, and server computing devices being located remotely with respect to one another, the first and second computing devices each storing data, wherein the at least one modification is made to the data stored by the first computing device comprises a modification to document data, spreadsheet data, an image file, image data, email data, data indicating the status an email, data indicating the status of a digital message, web browsing history data, contacts data, schedule data, calendar data, alert data, email data, bookmark data, schedule data, organization data, text data, text file, binary data, a music file, a video file, file and directory data, settings data, compressed data, archive data, database information, a database file, a shortcut, a redirect, a folder, checksum data, digital signature data, or a tag.

An embodiment of the present disclosure provides a system comprising:
a server computing device connected to a first computing device and a second computing device by a communications network, the first, second, and server computing devices being located remotely from one another, the first and second computing devices each storing data;
the first computing device being configured to:
   detect at least one modification has been made to the data stored by the first computing device,
   after detecting the at least one modification, compile first synchronization information comprising first information related to the at least one modification and identifying the first computing device, and
   send the first synchronization information to the server computing device,
   the server computing device being configured to identify the second computing device, and send first update information to the second computing device, the first update information comprising second information related to the at least one modification made to the data stored by the first computing device, and
   in response to receiving the first update information, the second computing device being configured to modify the data stored on the second computing device in accordance with the second information of the first update information, or output the second information of the first update information.

In another embodiment the present disclosure provides the system, wherein the second computing device is further configured to:
detect at least one modification has been made to the data stored by the second computing device, the at least one modification detected being other than the modification made in response to receiving the first update information,
after detecting the at least one modification made to the data stored by the second computing device, compile second synchronization information comprising third information related to the at least one modification made to the data stored by the second computing device and identifying the second computing device, and
send the second synchronization information to the server computing device,
the server computing device being configured to send second update information to the first computing device based on the second synchronization information, the second update information comprising fourth information related to the at least one modification made to the data stored by the second computing device, and
in response to receiving the second update information, the first computing device being configured to modify the data stored on the first computing device in accordance with the fourth information of the second update information, or output the fourth information of the second update information.

In another embodiment the present disclosure provides the system, wherein the communications network comprises a cellular network connected to a computer network by a gateway node,
at least one of the first and second computing devices is a mobile device connected to the cellular network, and
the server computing device is coupled to the computer network.

Yet another embodiment of the present disclosure provides the system, wherein the first computing device is a mobile device connected to the cellular network, and the second computing device is coupled to the computer network.

In another embodiment the present disclosure provides the system, wherein the second computing device is further configured to send a synchronization request identifying the second computing device to the server computing device, and the server computing device is further configured to compile the first update information in response to receiving the synchronization request.

In another embodiment the present disclosure provides the system further comprising a third computing device storing data, the third computing device being configured to:
detect at least one modification has been made to the data stored by the third computing device,
after detecting the at least one modification has been made to the data stored by the third computing device, compile second synchronization information comprising third information related to the at least one modification made to the data stored by the third computing device and identifying the third computing device, and
send the second synchronization information to the server computing device, wherein the server computing device is further configured to compile the second information of the first update information based on both the first and second synchronization information.

## Claims

1. A method performed by a first computing device, a second computing device, and a server computing device, the first, second, and server computing devices being located remotely with respect to one another, the first and second computing devices each storing data, the method comprising:
at a first computing device, after at least one modification is made to the data stored by the first computing device, compiling first synchronization information comprising first information related to the at least one modification and identifying the first computing device;
at the first computing device, sending the first synchronization information to a server computing device;
at the server computing device, identifying a second computing device associated with the first computing device;
at the server computing device, sending update information to the second computing device, the update information comprising second information related to the at least one modification made to the data stored by the first computing device; and
at the second computing device, in response to receiving the update information, modifying the data stored on the second computing device in accordance with the second information of the update information, or outputting the second information of the update information.

2. The method of claim 1, wherein the first information of the first synchronization information comprises:
a copy of at least a portion of the data stored by the first computing device, the portion comprising at least one block of data that was modified on the first computing device and at least one block of data that was not modified on the first computing device; and
wherein the second information of the update information preferably is substantially identical to the first information of the first synchronization information; or
wherein the method further comprises:
compiling the second information of the update information based on the first information of the first synchronization information, the second information of the update information being different from the first information of the first synchronization information.

3. The method of claim 1, wherein the first information of the first synchronization information comprises:
a copy of at least a portion of the data stored by the first computing device, the portion comprising at least one block of data that was modified on the first computing device; and
wherein the second information of the update information preferably is substantially identical to the first information of the first synchronization information; or
wherein the method further comprises:
compiling the second information of the update information based on the first information of the first synchronization information, the second information of the update information being different from the first information of the first synchronization information.

4. The method of claim 1, wherein the first information of the first synchronization information comprises:
at least one identification of a block of data that was modified on the first computing device and an indication describing the modification made to the block of data; and
wherein the second information of the update information preferably is substantially identical to the first information of the first synchronization information; or
wherein the method further comprises:
compiling the second information of the update information based on the first information of the first synchronization information, the second information of the update information being different from the first information of the first synchronization information.

5. The method of claim 1, further comprising:
at the server computing device, comparing the first synchronization information with synchronization information received previously from the first computing device or a different computing device; and
at the server computing device, compiling the update information based on the comparison; and

6. wherein at least one of the first and second computing devices preferably is a mobile device connected to a cellular network and the server computing device is coupled to a computer network connected to the cellular network by a gateway node; or
wherein at least one of the first and second computing devices preferably is a mobile device connected to a wireless access point constructed in accordance with one of the IEEE 802.11 family of protocols and the server computing device is coupled to a computer network connected to the wireless access point constructed in accordance with one of the IEEE 802.11 family of protocols directly or via one or more intervening networks.

7. The method of claim 1, wherein the first computing device is a mobile device connected to a cellular network, and
the second computing device and the server computing device are both coupled to a computer network connected to the cellular network by a gateway node.

8. The method of claim 1, further comprising:
at the first computing device, receiving the at least one modification to the data stored by the first computing device via a user interface; and
compiling the first synchronization information in response to having received the at least one modification to the data stored by the first computing device;or
wherein the method further comprises: at the second computing device, sending a synchronization request identifying the second computing device to the server computing device, the server computing device sending the update information for the second computing device in response to receiving the synchronization request.

9. The method of claim 1, wherein the at least one modification made to the data stored by the first computing device comprises a modification made to a first file associated with a first application, and the method further comprises:
at the second computing device, activating the first application or an associated application;
at the second computing device, sending a synchronization request identifying both the second computing device and the first application to the server computing device, and
at the server computing device, in response to receiving the synchronization request, compiling the update information, the second information of the update information comprising the modification made to the first file associated with the first application.

10. The method of claim 1, further comprising:
at the first computing device, after a different at least one modification is made to the data stored by the first computing device, compiling second synchronization information comprising third information related to the different at least one modification and identifying the first computing device;
at the first computing device, sending the second synchronization information to the server computing device; and
at the server computing device, compiling the second information of the update information based on both the first and second synchronization information.

11. The method of claim 1, further comprising:
at a third computing device storing data, after at least one modification is made to the data stored by the third computing device, compiling second synchronization information comprising third information related to the at least one modification made to the data stored by the third computing device and identifying the third computing device;
at the third computing device, sending the second synchronization information to the server computing device; and
at the server computing device, compiling the update information based on both the first and second synchronization information; and
wherein the second information of the update information preferably comprises a combination of the first information of the first synchronization information and the third information of the second synchronization information.

12. The method of claim 1, wherein the at least one modification is made to the data stored by the first computing device comprises a modification to document data, spreadsheet data, an image file, image data, email data, data indicating the status an email, data indicating the status of a digital message, web browsing history data, contacts data, schedule data, calendar data, alert data, email data, bookmark data, schedule data, organization data, text data, text file, binary data, a music file, a video file, file and directory data, settings data, compressed data, archive data, database information, a database file, a shortcut, a redirect, a folder, checksum data, digital signature data, or a tag.

13. A system comprising:
a server computing device connected to a first computing device and a second computing device by a communications network, the first, second, and server computing devices being located remotely from one another, the first and second computing devices each storing data;
the first computing device being configured to:
detect at least one modification has been made to the data stored by the first computing device,
after detecting the at least one modification, compile first synchronization information comprising first information related to the at least one modification and identifying the first computing device, and
send the first synchronization information to the server computing device,
the server computing device being configured to identify the second computing device, and send first update information to the second computing device, the first update information comprising second information related to the at least one modification made to the data stored by the first computing device, and
in response to receiving the first update information, the second computing device being configured to modify the data stored on the second computing device in accordance with the second information of the first update information, or output the second information of the first update information.

14. The system of claim 13, wherein the second computing device is further configured to:
detect at least one modification has been made to the data stored by the second computing device, the at least one modification detected being other than the modification made in response to receiving the first update information,
after detecting the at least one modification made to the data stored by the second computing device, compile second synchronization information comprising third information related to the at least one modification made to the data stored by the second computing device and identifying the second computing device, and
send the second synchronization information to the server computing device,
the server computing device being configured to send second update information to the first computing device based on the second synchronization information, the second update information comprising fourth information related to the at least one modification made to the data stored by the second computing device, and
in response to receiving the second update information, the first computing device being configured to modify the data stored on the first computing device in accordance with the fourth information of the second update information, or output the fourth information of the second update information; or
wherein the communications network comprises a cellular network connected to a computer network by a gateway node,
at least one of the first and second computing devices is a mobile device connected to the cellular network, and
the server computing device is coupled to the computer network; and
wherein the first computing device preferably is a mobile device connected to the cellular network, and the second computing device is coupled to the computer network.

15. The system of claim 13, wherein the second computing device is further configured to send a synchronization request identifying the second computing device to the server computing device, and the server computing device is further configured to compile the first update information in response to receiving the synchronization request; or
wherein the system further comprises a third computing device storing data, the third computing device being configured to:
detect at least one modification has been made to the data stored by the third computing device,
after detecting the at least one modification has been made to the data stored by the third computing device, compile second synchronization information comprising third information related to the at least one modification made to the data stored by the third computing device and identifying the third computing device, and
send the second synchronization information to the server computing device, wherein the server computing device is further configured to compile the second information of the first update information based on both the first and second synchronization information.
